# EUROPÄISCHE PATENTSCHRIFT

(11) **EP 3 076 148 B1**
(45) Veröffentlichungstag und Bekanntmachung des Hinweises auf die Patenterteilung: **08.05.2019**
(21) Anmeldenummer: 15161923.6
(22) Anmeldetag: 31.03.2015
(51) Int. Cl.: G01M 11/02

(54) **VORRICHTUNG UND VERFAHREN ZUM MESSEN VON ABBILDUNGSEIGENSCHAFTEN EINES OPTISCHEN ABBILDUNGSSYSTEMS**
DEVICE AND METHOD FOR MEASURING IMAGING PROPERTIES OF AN OPTICAL IMAGING SYSTEM
DISPOSITIF ET PROCÉDÉ DE MESURE DE CARACTÉRISTIQUES D'IMAGERIE D'UN SYSTÈME D'IMAGERIE OPTIQUE

(43) Veröffentlichungstag der Anmeldung: 05.10.2016
(73) Patentinhaber: Trioptics GmbH, 22880 Wedel (DE)
(72) Erfinder: Ruprecht, Aiko, 22605 Hamburg (DE)
(74) Vertreter: Seemann & Partner Patentanwälte mbB

(56) Entgegenhaltungen:
- EP-A1- 0 100 442
- EP-A2- 2 148 501
- DE-A1-102013 212 097
- US-A- 3 733 135
- US-A1- 2005 212 951
- MICHAEL DAHL ET AL: "<title>Ultra-fast MTF Test for High-Volume production of CMOS Imaging Cameras</title>", PROCEEDINGS OF SPIE, Bd. 5180, 22. August 2003 (2003-08-22), Seiten 293-300, XP055212910, ISSN: 0277-786X, DOI: 10.1117/12.507928

## Beschreibung

Die Erfindung betrifft eine Vorrichtung sowie ein Verfahren zum Messen von Abbildungseigenschaften eines optischen Abbildungssystems.

Zur Bestimmung der Abbildungsqualität von optischen Abbildungssystemen, beispielsweise Kameramodulen, sind verschiedene technische Ansätze bekannt. Wird eine Abbildungsoptik einzeln geprüft, so muss in einem ersten Schritt deren Abbildungsebene identifiziert werden, um zwischen einem Qualitätsmangel des Abbildungssystems und einer Defokussierung unterscheiden zu können. Aus GB 2 420 239 A ist ein Verfahren zum Fokussieren des Objektivs eines Kameramoduls bekannt. Ein weiteres Verfahren zur Fokussierung einer Abbildungsoptik geht aus US 2005/0212 951 A1 hervor. Weitere Verfahren, bei denen der Grad der Defokussierung aus lediglich einem einzigen Kamerabild bestimmt wird, sind beispielsweise aus GB 2 460 654 A oder aus JP 56 94 883 A bekannt. Bei diesen Verfahren werden gestufte Testobjekte verwendet, die mit Hilfe der zu prüfenden Optik abgebildet werden.

Eine etablierte und aussagekräftige Methode zur Bestimmung der Abbildungsqualität eines optischen Abbildungssystems ist die Messung der Modulationstransferfunktion (MTF). Eine Variante ist die Multifrequenz-MTF-Analyse, bei der MTF-Werte für eine große Anzahl von Raumfrequenzen ermittelt werden. Hierzu wird die Abbildung einer beleuchteten linienhaft ausgedehnten Struktur, beispielsweise eines Spalts oder einer Kante, mittels Fourieranalyse untersucht.

In DE 10 2013 212 097 A1 ist eine Vorrichtung zur Prüfung und Justierung eines optischen Geräts offenbart. Dabei scheint Außenlicht durch ein Testmuster, so dass mittels eines Kollimatorelements eine Abbildung des Testmusters auf eine Linse eines optischen Geräts projiziert wird.

EP 0 100 442 A1 offenbart ein Verfahren zur Prüfung von Gleitsichtbrillengläsern. Dabei wird ein Negativbild eines Testmusters durch das zu testende Gleitsichtbrillenglas auf eine Abbildung des Testmusters projiziert und so auf Abbildungsfehler untersucht.

In US 3,733,135 A wird ein System offenbart, das die Aufnahme einer MTF-Kurve eines Elektrolumineszenzschirms ermöglicht.

EP 2 148 501 A2 betrifft eine Vorrichtung und ein Verfahren zum Ausrichten eines Bildsensors, der in einem Kameragehäuse angeordnet ist. Dazu wird eine Testmaske auf den Bildsensor abgebildet, um die Ausrichtung des Bildsensors in den drei Raumrichtungen und die Verkippung um die drei Rotationsachsen gegenüber dem Kameragehäuse festzustellen.

Es ist eine Aufgabe der Erfindung, eine Vorrichtung und ein Verfahren zum Messen von Abbildungseigenschaften eines optischen Abbildungssystems anzugeben, wobei eine schnelle und aussagekräftige Messung ermöglicht werden soll.

Die Aufgabe wird gelöst durch eine Vorrichtung zum Messen von Abbildungseigenschaften eines optischen Abbildungssystems, welche dadurch fortgebildet ist, dass ein Kollimator mit einer Strichplatte, ein Bildsensor und eine Verarbeitungseinheit umfasst sind, wobei
- der Kollimator und das optische Abbildungssystem derart zueinander angeordnet sind, dass das optische Abbildungssystem von dem Kollimator, der ein Testmuster der Strichplatte in eine definierte Entfernung abbildet, beleuchtbar ist,
- das Testmuster zumindest eine Längsrichtung aufweist und diese Längsrichtung mit einer optischen Achse des Kollimators einen Winkel ungleich 90° einschließt, wobei das Testmuster aufgrund seiner geneigten Anordnung teilweise vor und teilweise hinter einer Objektebene, welche von dem optischen Abbildungssystem scharf in die Bildebene abgebildet wird, liegt und
- der Bildsensor in einer Schärfeebene des optischen Abbildungssystems angeordnet ist und
- die Verarbeitungseinheit dazu eingerichtet ist, eine Mehrfrequenz-MTF-Analyse in mehreren voneinander verschiedenen, in Längsrichtung gegeneinander verschobenen, Bereichen einer mit dem Bildsensor erfassten Abbildung des Testmusters durchzuführen.

Vorteilhaft werden bei der Vorrichtung gemäß Aspekten der Erfindung die Vorteile einer Multifrequenz-MTF-Analyse, die eine umfassende Information über die Abbildungsqualität des optischen Abbildungssystems erlaubt, mit der Schnelligkeit eines "One-Shot"-Messverfahrens verbunden, bei dem die gewünschte Information aus lediglich einem einzigen Bild gewonnen wird. Ein wichtiges Merkmal der Erfindung ist, dass das Testmuster entlang seiner Längsrichtung gegenüber der optischen Achse des Kollimators geneigt angeordnet ist. Diese Neigung oder Verkippung bedingt, dass eine Ebene, in der sich das Testmuster erstreckt, und die optische Achse des Kollimators einen Winkel ungleich 90° einschließen.

Durch diese Verkippung wird erreicht, dass das Testobjekt, also das auf der Strichplatte vorhandene Testmuster, in Richtung der optischen Achse im Objektfeld ausgedehnt ist. Es liegt aufgrund seiner geneigten Anordnung teilweise vor und teilweise hinter einer Objektebene, welche von dem optischen Abbildungssystem scharf in die Bildebene abgebildet wird. Entlang verschiedener Positionen entlang der Längsrichtung des Testmusters wird dieses daher mehr oder weniger scharf in die Bildebene abgebildet. Ein enger Bereich, idealerweise ein Punkt oder eine Linie, wird exakt scharf in die Bildebene abgebildet.

Indem in den voneinander verschiedenen Bereichen des Testmusters, die in Längsrichtung gegeneinander verschoben sind, jeweils eine MTF-Analyse durchgeführt wird, wird die gleiche Aussage über die Abbildungsqualität der Optik erreicht, wie sie mit Hilfe einer Fokusserie möglich ist. Bei einer Fokusreihe wäre in jedem einzelnen Bild eine Multifrequenz-MTF-Analyse durchzuführen. Außerdem müssten mehrere Bilder aufgenommen werden. Dies wird gemäß Aspekten der Erfindung vorteilhaft vermieden, was die Prüfung des optischen Abbildungssystems wesentlich beschleunigt.

Mit der erfindungsgemäßen Vorrichtung ist es möglich, sowohl die Fokuslage zu bestimmen als auch detaillierte Informationen über die Abbildungsqualität des optischen Abbildungssystems aus einem einzigen Kamerabild zu gewinnen. Die Messung ist also nicht nur sehr aussagekräftig sondern auch innerhalb sehr kurzer Zeit durchführbar. Dies ist vor allem für Einzelprüfungen großer Stückzahlen vorteilhaft, wie sie beispielsweise bei Kameramodulen für mobile Benutzerendgeräte durchgeführt werden.

Die Vorrichtung zum Messen der Abbildungseigenschaften eines optischen Abbildungssystems ist ferner konstruktiv einfach zu realisieren. Vor allem kann ein einfach herstellbares Testmuster verwendet werden, beispielsweise ein Spalt oder eine Kante. Das auf eine Planfläche, d.h. die Strichplatte, aufgebracht und mittels des Kollimators projizierte Testmuster weist aufgrund der Verkippung oder Neigung der Strichplatte gegenüber der optischen Achse des Kollimators einen Schärfeverlauf auf dem Bildsensor auf.

Die definierte Entfernung, in die der Kollimator das Testmuster abbildet, ist insbesondere deutlich größer als der Kollimator. Bevorzugt liegt die definierte Entfernung im Unendlichen. Mit anderen Worten erzeugt der Kollimator also näherungsweise parallele Strahlenbündel.

Die Multifrequenz-MTF-Analyse wird so durchgeführt, wie es beispielsweise in: M. Dahl, J. Heinisch, S. Krey, S.M. Bäumer, J. Lurquin, L. Chen, "Ultra-fast MTF Test for High-Volume Production of CMOS Imaging Cameras", Proc. SPIE, Vol. 5180 (2003) beschrieben ist. Ferner ist die Multifrequenz-MTF-Analyse in ISO 12233:2000 und ISO 12233:2014 beschrieben. Gemäß einer vorteilhaften Ausführungsform ist die Vorrichtung dadurch fortgebildet, dass die Verarbeitungseinheit dazu eingerichtet ist, aus den Daten der MTF-Analyse eine Schärfeebene und/oder eine Abbildungsqualität des optischen Abbildungssystems zu bestimmen. Vorteilhaft wird die Möglichkeit geschaffen, auf der Grundlage einer MTF-Analyse oder mehrerer MTF-Analysen, die in verschiedenen Bereichen des Testmusters durchgeführt werden, sowohl die Schärfeebene als auch die optischen Eigenschaften des Abbildungssystems zu bestimmen. Wichtig und vorteilhaft ist, dass die Analyse auf der Grundlage lediglich eines einzigen Bildes vorgenommen wird. Es ist insbesondere vorgesehen, dass die MTF-Analyse in mehr als zwei Bereichen vorgenommen wird. Die Bereiche können sich gegenseitig überlappen oder diskret sind. Es ist ferner vorgesehen, dass ausgehend von den Ergebnissen einer ersten Analyse einer ersten Gruppe von Bereichen eine neue Gruppe von Bereichen festgelegt wird. Beispielsweise können so in einem iterativen Verfahren Zwischenwerte gewonnen werden, indem die Bereiche der neuen Gruppe weniger weit beabstandet sind, als dies bei der ersten Gruppe der Fall ist.

Als Testmuster, welches eine Längsrichtung aufweist, sollen neben einem Spalt, einer Kante oder eine Linie auch linienhafte Anordnungen anderer geometrischer Formen angesehen werden. Beispielsweise sind als Testmuster entlang einer Linie angeordnete Rechtecke, Quadrate oder auch Dreiecke einer solchen Form vorgesehen.

Bevorzugt besteht das Testmuster aus einer linienförmigen Struktur, die sich in der Längsrichtung erstreckt. Beispielsweise ist das Testmuster eine Linie, ein Spalt oder eine Kante. Diese Muster sind in einer Planebene der Strichplatte, beispielsweise durch Ätzen oder Drucken, hergestellt. Im Vergleich zu mehrstufigen Testobjekten ist eine solche Strichplatte besonders einfach, mit geringen Kosten und gleichzeitig präzise herstellbar.

Gemäß einer weiteren vorteilhaften Ausführungsform ist vorgesehen, dass das Testmuster eine Schar zumindest näherungsweise paralleler Linien umfasst, wobei diese Linien in der Längsrichtung nebeneinander angeordnet sind und sich jeweils in einer Linienrichtung erstrecken, die zumindest näherungsweise senkrecht zu der Längsrichtung orientiert ist.

Auch ein solches Testmuster wird als linienhafte Struktur angesehen, da es eine Ausdehnung in der Längsrichtung, im konkreten Beispiel also quer zur Richtung der einzelnen Linien, aufweist.

Bei dem genannten Testmuster werden einige oder auch nur eine einzige der Linien zumindest näherungsweise scharf abgebildet. Die in Längsrichtung zu beiden Seiten dieser Linie in Längsrichtung liegenden weiteren Linien des Testmusters werden mit zunehmender Entfernung unschärfer abgebildet.

Unter einer Linie ist im Kontext der vorliegenden Beschreibung ebenso eine Gerade oder eine Kante zu verstehen. Auf den einzelnen Abbildern der Linien durchgeführte Multifrequenz-MTF-Analysen erlauben eine Analyse analog einer Fokusserie, wobei jedoch lediglich ein einziges Bild ausgewertet wird.

Besonders vorteilhaft ist die Orientierung der Längsrichtung des Testmusters zumindest näherungsweise parallel zu einer Pixelrichtung des Bildsensors orientiert. Beispielsweise wird der Bildsensor um die optische Achse des Kollimators so weit rotiert, bis die Orientierung seiner Pixel, beispielsweise der Zeilen oder Reihen, zumindest näherungsweise parallel zur Längsrichtung der Abbildung des Testmusters orientiert ist.

Gemäß einer vorteilhaften Weiterbildung ist außerdem vorgesehen, dass die Linienrichtung zumindest näherungsweise parallel zu einer Kippachse des Testmusters orientiert ist, wobei sich das Testmuster in einer Ebene erstreckt, die gegenüber der optischen Achse des Kollimators derart geneigt ist, dass die Längsrichtung der Schar zumindest näherungsweise paralleler Linien mit der optischen Achse des Kollimators einen Winkel ungleich 90° einschließt. Unter einer Linie ist in diesem Zusammenhang ebenso eine Gerade oder eine Kante zu verstehen.

Mit anderen Worten ist das Testmuster so angeordnet, dass sich die einzelnen Linien des Testmusters jeweils in einer Schärfeebene erstrecken. Es findet also kein Schärfeverlauf entlang einer einzelnen Linie statt. In Längsrichtung, in der die einzelnen Linien nebeneinander, insbesondere parallel zueinander, angeordnet sind, findet jedoch ein Schärfeverlauf statt, so dass für jede einzelne Linie jeweils ein bestimmter Defokussierungsgrad vorhanden ist. Vorteilhaft ist es so möglich, die Multifrequenz-MTF-Analyse an einem beliebigen Ort der einzelnen Linie oder auf der gesamten einzelnen Linie des Testmusters durchzuführen. Durch die erhöhte Anzahl der ausgewerteten Pixel steigt die Zuverlässigkeit und Robustheit der Analyse.

Gemäß einer weiteren vorteilhaften Ausführungsform ist die Vorrichtung dadurch fortgebildet, dass sich das Testmuster in eine erste Längsrichtung und in eine zweite Längsrichtung erstreckt, wobei die erste und die zweite Längsrichtung jeweils einen zumindest näherungsweise identischen Winkel ungleich 90° mit der optischen Achse des Kollimators einschließen und wobei insbesondere vorgesehen ist, dass die erste Längsrichtung und die zweite Längsrichtung in einer gemeinsamen Ebene einen Winkel von zumindest näherungsweise 90° einschließen. Wird beispielsweise ein Kreuz oder ein Rechteck als Testmuster verwendet, so kann dies beispielsweise dadurch erreicht werden, dass die Strichplatte um eine Kippachse geneigt wird, die senkrecht zur optischen Achse verläuft, diese schneidet und zu den Längsrichtungen der Testmuster einen Winkel von zumindest näherungsweise 45° aufweist. In diesem Beispiel bilden die einzelnen Linien bzw. Kanten jeweils Testmuster gemäß der oben aufgeführten Beschreibung aus.

Gemäß dieser Ausführungsform wird die Möglichkeit geschaffen, für zwei orthogonale Richtungen im Bildfeld jeweils eine vergleichbare Defokussierung auszuwerten. Wiederum wird vorteilhaft der Bildsensor so um die optische Achse des Kollimators rotiert, dass eine Orientierung seiner Pixel zumindest näherungsweise entlang der Längsrichtungen des ersten bzw. zweiten Testmusters verläuft. Es ist vorteilhaft möglich, gleichzeitig zwei Defokusreihen in zwei unterschiedlichen Richtungen zu untersuchen.

Gemäß einer weiteren vorteilhaften Ausführungsform ist die Vorrichtung zum Messen von Abbildungseigenschaften eines optischen Abbildungssystems dadurch fortgebildet, dass der Kollimator dazu eingerichtet ist, das optische Abbildungssystem mit zumindest zwei Testmustern zu beleuchten, wobei sich ein erstes Testmuster in einer ersten Ebene erstreckt und ein zweites Testmuster in einer zweiten Ebene erstreckt, wobei die erste Ebene und die zweite Ebene konjugierte Ebenen des Kollimators sind, und wobei die erste Ebene und die zweite Ebene in unterschiedliche Richtungen gegenüber der optischen Achse des Kollimators geneigt sind, wobei insbesondere eine erste Kippachse, um die die erste Ebene gegenüber der optischen Achse des Kollimators geneigt ist, und eine zweite Kippachse, um die die zweite Ebene gegenüber der optischen Achse des Kollimators geneigt ist, einen Winkel von zumindest näherungsweise 90° einschließen, wobei ferner insbesondere die erste Ebene und die zweite Ebene derart geneigt sind, dass eine Längsrichtung des ersten Testmusters und eine weitere Längsrichtung des zweiten Testmusters mit der optischen Achse des Kollimators einen zumindest näherungsweise identischen Winkel ungleich 90° einschließen.

Die Vorrichtung umfasst mit anderen Worten zwei in unterschiedliche Richtungen geneigte Strichplatten, welche in konjugierten Ebenen angeordnet sind. Der Neigungswinkel der beiden Strichplatten bzw. Testmuster kann gleich oder zumindest näherungsweise identisch sein. Die die Strichplatten abbildenden Strahlengänge werden durch einen als Strahlkombinierer wirkenden Strahlteiler vereint. So ist es vorteilhaft möglich, in einem einzigen Bild eine erste und eine zweite Defokusreihe zu untersuchen, wobei durch Einstellung der Verkippung auch der Umfang des jeweiligen Defokus individuell einstellbar ist.

Wird wiederum beispielsweise eine Schar paralleler Linien als Testmuster verwendet, so kann, wie auch bei dem zuvor genannten Ausführungsbeispiel, für eine einzige Messung eine große Anzahl von Pixeln herangezogen werden, was die Zuverlässigkeit und Genauigkeit der MTF-Analyse verbessert.

Gemäß einer weiteren vorteilhaften Ausführungsform ist ferner vorgesehen, dass die Vorrichtung eine Mehrzahl von Kollimatoren umfasst, wobei die Kollimatoren derart angeordnet sind, dass sie das optische Abbildungssystem aus verschiedenen Richtungen beleuchten.

Deckt das Testmuster in der Abbildungsebene des zu untersuchenden optischen Abbildungssystems nur einen Teil des möglichen Bildfeldes ab, so ist es mit einer Mehrzahl von Kollimatoren möglich, das gesamte Bildfeld zu untersuchen. Diese sind in unterschiedlichen Winkelausrichtungen vor dem zu prüfenden optischen Abbildungssystem angeordnet und decken bevorzugt dessen gesamtes Bildfeld ab. Da so in mehreren Bereichen des Bildfeldes der lokale Defokus bestimmt wird, kann eine Aussage über eine Verkippung der Abbildungsebene oder auch über eine Bildfeldwölbung getroffen werden. Als Bildfeldwölbung wird eine Wölbung der Fokusebene bezeichnet.

Ferner bevorzugt ist vorgesehen, dass der Winkel zwischen der Längsrichtung des Testmusters und der optischen Achse des Kollimators größer als 0° und kleiner als 90°, insbesondere größer gleich 3° und kleiner gleich 60° und ferner insbesondere größer gleich 5° und kleiner gleich 40° ist. Die zuvor genannten Winkelbereiche haben sich in der Praxis als besonders vorteilhaft herausgestellt.

Die erfindungsgemäße Aufgabe wird ferner gelöst durch ein Verfahren zum Messen von Abbildungseigenschaften eines optischen Abbildungssystems, wobei dieses durch die folgenden Schritte fortgebildet ist:
- Beleuchten des optischen Abbildungssystems mit einem Kollimator, der ein Testmuster in eine definierte Entfernung abbildet,
   wobei das Testmuster zumindest eine Längsrichtung aufweist, und wobei die Längsrichtung mit einer optischen Achse des Kollimators einen Winkel von ungleich 90° einschließt, wobei das Testmuster aufgrund seiner geneigten Anordnung teilweise vor und teilweise hinter einer Objektebene, welche von dem optischen Abbildungssystem scharf in die Bildebene abgebildet wird, liegt,
- Anordnen eines Bildsensors in einer Schärfeebene des optischen Abbildungssystems,
- Durchführen einer Mehrfrequenz-MTF-Analyse in mehreren voneinander verschiedenen, in Längsrichtung gegeneinander verschobenen, Bereichen einer mit dem Bildsensor erfassten Abbildung des Testmusters.

Auf das erfindungsgemäße Verfahren treffen gleiche oder ähnliche Vorteile zu, wie sie bereits im Hinblick auf die Vorrichtung zum Messen von Abbildungseigenschaften gemäß Aspekten der Erfindung erwähnt wurden, weshalb auf eine erneute Vorstellung verzichtet wird.

Das Verfahren ist dadurch fortgebildet, dass aus den Daten der MTF-Analyse eine Abbildungsqualität und/oder eine Schärfeebene des optischen Abbildungssystems bestimmt werden.

Ferner ist insbesondere vorgesehen, dass als Testmuster eine Schar zumindest näherungsweise paralleler Linien abgebildet wird, wobei diese Linien in der Längsrichtung nebeneinander angeordnet sind und sich jeweils in einer Linienrichtung erstrecken, die zumindest näherungsweise senkrecht zu der Längsrichtung orientiert ist. Der Begriff Linie wird in diesem Zusammenhang ebenso für eine Gerade oder eine Kante verwendet.

Vorteilhaft erlaubt die Auswertung paralleler Linien, eine Vielzahl von Pixeln des Bildsensors zur Auswertung heranzuziehen. Hierzu ist das Verfahren bevorzugt so ausgestaltet, dass der Bildsensor so ausgerichtet wird, dass die Orientierung seiner Pixelstruktur, beispielsweise seiner Zeilen oder Reihen zumindest näherungsweise parallel zu der Längsrichtung des Testmusters ausgerichtet wird. Hierzu wird beispielsweise der Bildsensor in der Bildebene so lange rotiert, bis eine entsprechende Ausrichtung vorliegt.

Gemäß einer Ausführungsform ist das Verfahren dadurch fortgebildet, dass die Schar zumindest näherungsweise paralleler Linien derart abgebildet wird, dass die Linienrichtung zumindest näherungsweise parallel zu einer Kippachse des Testmusters orientiert ist, wobei sich das Testmuster in einer Ebene erstreckt, die gegenüber der optischen Achse des Kollimators derart geneigt ist, dass die Längsrichtung der Schar zumindest näherungsweise paralleler Linien mit der optischen Achse des Kollimators einen Winkel ungleich 90° einschließt.

Gemäß einer weiteren vorteilhaften Ausführungsform ist ferner vorgesehen, dass der Kollimator ein Testmuster mit einer ersten Längsrichtung und einer zweiten Längsrichtung abbildet, wobei die erste Längsrichtung und die zweite Längsrichtung jeweils einen zumindest näherungsweise identischen Winkel ungleich 90° mit der optischen Achse des Kollimators einschließen und wobei insbesondere vorgesehen ist, dass die erste Längsrichtung und die zweite Längsrichtung in einer gemeinsamen Ebene einen Winkel von zumindest näherungsweise 90° einschließen. Vorteilhaft wird eine Aussage über den Defokus bzw. die Abbildungsqualität des optischen Abbildungssystems in zwei unterschiedliche Richtungen gewonnen.

Ferner ist das erfindungsgemäße Verfahren dadurch fortgebildet, dass das optische Abbildungssystem mit zumindest zwei Testmustern beleuchtet wird, wobei sich ein erstes Testmuster in einer ersten Ebene erstreckt und ein zweites Testmuster in einer zweiten Ebene erstreckt, wobei die erste Ebene und die zweite Ebene konjugierte Ebenen des Kollimators sind und wobei die erste Ebene und die zweite Ebene in unterschiedliche Richtungen gegenüber der optischen Achse des Kollimators geneigt sind, wobei insbesondere eine erste Kippachse, um die die erste Ebene gegenüber der optischen Achse des Kollimators geneigt ist, und eine zweite Kippachse, um die die zweite Ebene gegenüber der optischen Achse des Kollimators geneigt ist, einen Winkel von zumindest näherungsweise 90° einschließen, wobei ferner insbesondere die erste Ebene und die zweite Ebene derart geneigt sind, dass eine erste Längsrichtung des ersten Testmusters und eine zweite Längsrichtung des zweiten Testmusters mit der optischen Achse des Kollimators einen zumindest näherungsweise identischen Winkel ungleich 90° einschließen.

Mit Hilfe eines solchen Verfahrens können neben einer Aussage über die Lage der Bildebene und die optischen Abbildungseigenschaften des Systems, wie sie sich aus der Multifrequenz-MTF-Analyse ableiten lassen, auch Informationen bezüglich einer Verkippung der Bildebene oder einer Bildfeldwölbung gewonnen werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematisch vereinfachten Längsschnitt einer Vorrichtung zum Messen von Abbildungseigenschaften eines optischen Abbildungssystems,
- Fig. 2a) und b): schematisch vereinfachte Aufsichten auf weitere Strichplatten für Vorrichtungen zum Messen von Abbildungseigenschaften eines optischen Abbildungssystems,
- Fig. 3: eine weitere Vorrichtung zum Messen von Abbildungseigenschaften eines optischen Abbildungssystems in einem schematisch vereinfachten Längsschnitt,
- Fig. 4a) und b): schematisch vereinfachte Aufsichten auf eine erste und eine zweite in einer solchen Vorrichtung verwendete Strichplatte und
- Fig. 5: eine weitere Vorrichtung zum Messen von Abbildungseigenschaften eines optischen Abbildungssystems, umfassend eine Mehrzahl von Kollimatoren, in einer schematisch vereinfachten Längsschnittansicht.

In den Zeichnungen sind jeweils gleiche oder gleichartige Elemente und/oder Teile mit denselben Bezugsziffern versehen, so dass von einer erneuten Vorstellung jeweils abgesehen wird.

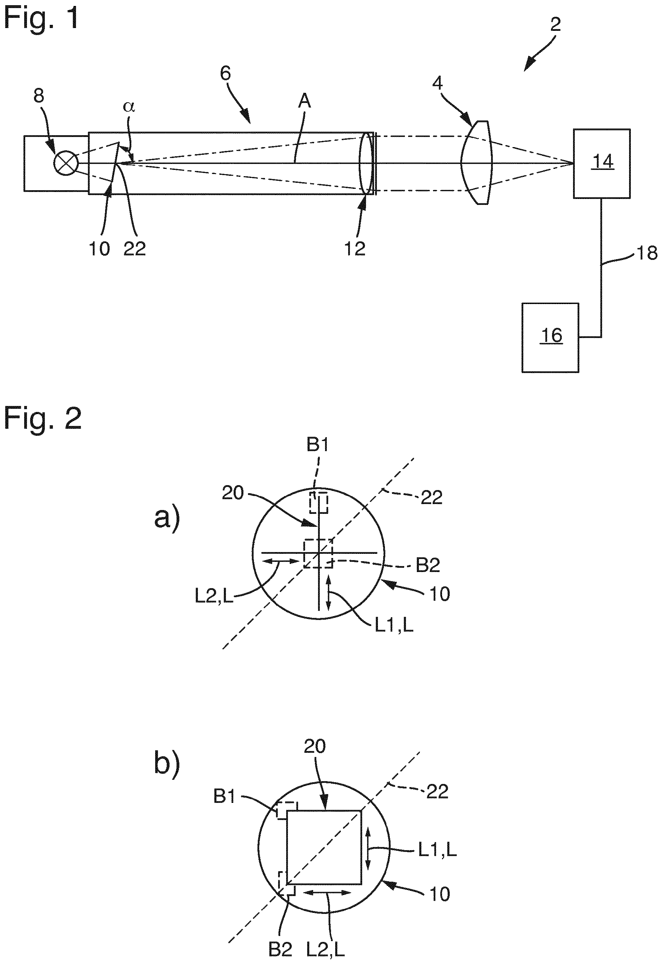

Fig. 1 zeigt in einer schematisch vereinfachten Längsschnittansicht eine Vorrichtung 2 zum Messen von Abbildungseigenschaften eines schematisch angedeuteten optischen Abbildungssystems 4, bei dem es sich beispielsweise um eine Linse, ein Objektiv oder dergleichen handelt. Bevorzugt wird die Vorrichtung 2 zur Einzelprüfung von Kameramodulen oder Kameraoptiken elektronischer Benutzerendgeräte verwendet.

Die Vorrichtung 2 umfasst einen Kollimator 6, dessen Lichtquelle 8 ein auf einer Strichplatte 10 vorhandenes Testmuster mit Hilfe einer Kollimatorlinse 12 in eine zumindest näherungsweise definierte Entfernung abbildet. Insbesondere ist vorgesehen, dass der Kollimator 6 derart eingerichtet ist, dass er das Bild des auf der Strichplatte 10 vorhandenen Testmusters in eine unendlich weite Entfernung abbildet.

Die Vorrichtung 2 zum Messen der Abbildungseigenschaften des optischen Abbildungssystems 4 umfasst ferner einen Bildsensor 14, insbesondere einen flächigen Bildsensor, beispielsweise einen CCD- oder CMOS-Sensor. Der Bildsensor 14 ist zumindest näherungsweise in einer Schärfeebene des zu prüfenden optischen Abbildungssystems 4 angeordnet. Bei der Einzelprüfung von Kameramodulen sind das optische Abbildungssystem 4 und der Bildsensor 14 Teile des zu prüfenden Kameramoduls.

Ein Bild des auf der Strichplatte 10 vorhandenen Testmusters, welches von dem zu prüfenden optischen Abbildungssystem 4 erzeugt wird, wird auf dem Bildsensor 14 abgebildet. Mit anderen Worten wird also das zu prüfende optische Abbildungssystem, beispielsweise ein Kameramodul, mit Hilfe des Kollimators 6 mit dem auf der Strichplatte 10 vorhandenen Testmuster beleuchtet, ohne dass das Kameramodul zerlegt werden muss oder im noch nicht endmontierten Zustand geprüft werden muss.

Die Vorrichtung 2 umfasst ferner eine Verarbeitungseinheit 16, beispielsweise einen Computer, eine Workstation oder dergleichen. Sie ist über eine geeignete Datenverbindung 18 mit dem Bildsensor 14 gekoppelt. Die Verarbeitungseinheit 16 ist dazu eingerichtet, den Bildsensor 14 auszulesen und anzusteuern. Sie ist ferner dazu eingerichtet, eine Mehrfrequenz-MTF-Analyse durchzuführen.

Fig. 2a) zeigt eine schematisch vereinfachte Aufsicht einer Strichplatte 10, wie sie beispielsweise in der in Fig. 1 dargestellten Vorrichtung 2 eingesetzt wird. Die Strichplatte 10 umfasst ein Testmuster 20, bei dem es sich beispielhaft um einen kreuzförmigen Spalt handelt. Das Testmuster 20 erstreckt sich in eine erste Längsrichtung L1 und in eine zweite Längsrichtung L2. Mit anderen Worten handelt es sich bei dem Testmuster 2 um eine linienförmige Struktur, die sich in zumindest einer Längsrichtung L erstreckt. Im dargestellten Ausführungsbeispiel erstreckt sich diese in zwei Längsrichtungen L, nämlich in die erste und in die zweite Längsrichtung L1, L2. Es sind ebenfalls Testmuster vorgesehen, die sich lediglich in einer Längsrichtung L erstrecken, beispielsweise ein einzelner Spalt oder eine einzelne Kante. Ferner sind Testmuster 20 vorgesehen, bei denen andere geometrische Formen, beispielsweise Rechtecke oder Quadrate, entlang der Längsrichtung L oder entlang zweier Längsrichtungen L1, L2 nebeneinander angeordnet sind.

Das auf der Strichplatte 10 vorhandene Testmuster 20 ist gegenüber einer optischen Achse A des Kollimators 6 um einen Winkel α geneigt, welcher ungleich 90° ist (Fig. 1). Genauer gesagt ist die Strichplatte 10 derart geneigt, dass eine Längsrichtung L1, L2 des Testmusters mit der optischen Achse A des Kollimators 6 den Winkel α ungleich 90° einschließt. Als Winkel α zwischen der Längsrichtung L1, L2 des Testmusters 20 und der optischen Achse A des Kollimators 6 wird stets der kleinere Winkel am Kreuzungspunkt verstanden, so wie es beispielhaft in Fig. 1 gezeigt ist.

Um eine Verkippung des Testmusters 20 gegenüber der optischen Achse A zu erreichen, ist die Strichplatte 10 (Fig. 2) um eine Kippachse 22 aus einer Position, in der die optische Achse A senkrecht auf der Strichplatte 10 steht, verkippt. Somit befindet sich ein Teil des Testmusters 20 hinter dieser angenommenen senkrechten Ebene, während sich weitere Bereiche der Spalten vor dieser angenommenen Ebene erstrecken. Im dargestellten Ausführungsbeispiel erstrecken sich beispielsweise die rechts unten dargestellten Hälften der Spalte hinter und die links oben dargestellten Bereiche der Spalte vor dieser Ebene. Im Ergebnis wird, sofern sich der Bildsensor 14 im Fokus des optischen Abbildungssystems 4 befindet, der zentrale Teil des Testmusters 20 scharf abgebildet, wobei sich zu beiden Seiten der Kippachse 20 in den dort jeweils vorhandenen Bereichen des Testmusters 20 ein jeweils zunehmender Defokus in entgegengesetzte Richtungen einstellt. Unabhängig davon, ob sich der Bildsensor 14 unmittelbar in der Fokusebene des optischen Abbildungssystems 4 befindet, wird ein Teil des Testmusters 20, der nicht unbedingt dessen Zentrum entsprechen muss, auf dem Bildsensor 14 scharf abgebildet. Dies ist der Fall, da sich der Bildsensor 14 zumindest näherungsweise in der Fokusebene des optischen Abbildungssystems 4 befindet.

Die Verarbeitungseinheit ist dazu eingerichtet, eine Mehrfrequenz-MTF-Analyse in mehreren voneinander verschiedenen, insbesondere in Längsrichtung L1, L2 gegeneinander verschobenen, Bereichen B1, B2 des Testmusters 20 durchzuführen. Beispielhaft sind in Fig. 2a) ein erster Bereich B1 und ein zweiter Bereich B2 dargestellt. Der erste und der zweite Bereich B1, B2 sind weiterhin beispielhaft in der ersten Längsrichtung L1 gegeneinander verschoben. Wird der zentrale Bereich des Testmusters 20 scharf auf dem Bildsensor 14 abgebildet, so wird im zweiten Bereich B2 eine MTF-Analyse an dem dargestellten Spalt durchgeführt, welcher im Wesentlichen scharf abgebildet ist. Im ersten Bereich B1 wird hingegen ein deutlich defokussiert bzw. unscharf abgebildeter Teil des sich in der ersten Längsrichtung L1 erstreckenden Spalts mit Hilfe der Mehrfrequenz-MTF-Analyse untersucht. Auf der Grundlage der Daten der MTF-Analyse ist es so möglich, eine Schärfeebene, aber auch die Abbildungsqualität des optischen Abbildungssystems 4 zu bestimmen.

Lediglich beispielhaft sind in Fig. 2a) die untersuchten Bereiche B1, B2 auf der Strichplatte 10 dargestellt. Ausgewertet werden selbstverständlich die von dem optischen Abbildungssystem 4 erzeugten Bilder des Testmusters 20 anhand der von dem Bildsensor 14 aufgenommenen Daten.

Fig. 2b) zeigt eine weitere Strichplatte 10 in einer schematisch vereinfachten Aufsicht. Diese umfasst zentral einen quadratischen Ausschnitt, an dessen Kanten jeweils zwei gegenüberliegende parallele linienförmige Strukturen entstehen, die in die erste bzw. in die zweite Längsrichtung L1, L2 orientiert sind. An diesen Kanten, genauer in gegeneinander verschobenen Bereichen B1, B2 wird, wie vorstehend erläutert, eine Mehrfrequenz-MTF-Analyse durchgeführt, um die Schärfeebene und/oder die Abbildungsqualität des optischen Abbildungssystems 4 zu bestimmen. Die Strichplatte 10 ist um die Kippachse 22 aus einer Senkrechten zu der optischen Achse A des Kollimators 6 herausgekippt, so dass entlang der Kanten des Quadrats wiederum ein Schärfe- oder Defokusverlauf in der Abbildung des Quadrats auf dem Bildsensor 14 erzeugt wird.

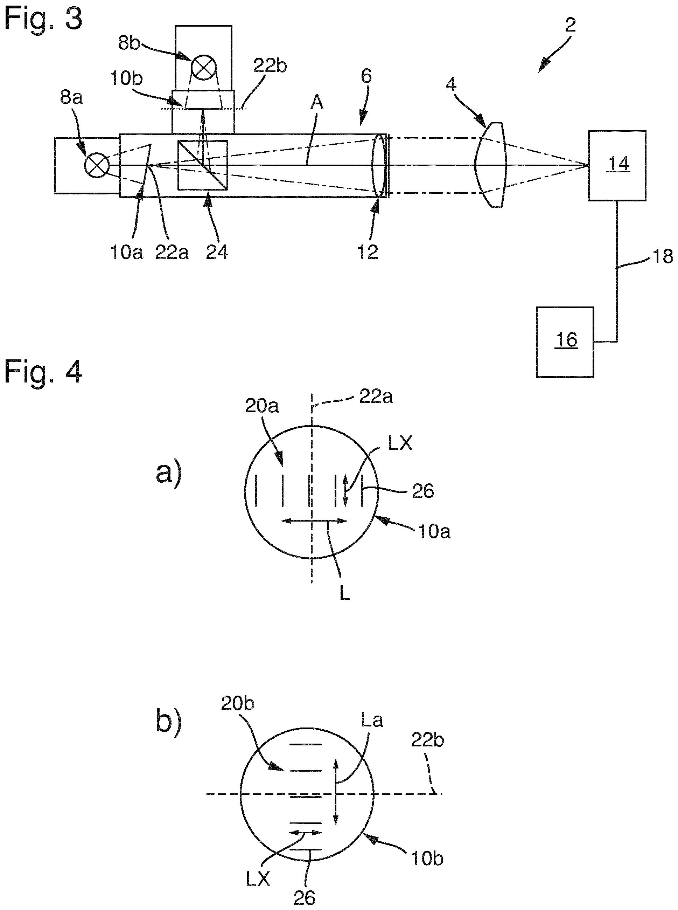

Fig. 3 zeigt eine weitere Vorrichtung 2 zum Messen der Abbildungseigenschaften eines optischen Abbildungssystems 4 gemäß einem weiteren Ausführungsbeispiel. Der Kollimator 6, der wiederum eine Lichtquelle 8 und eine Kollimatorlinse 12 umfasst, ist dazu eingerichtet, das optische Abbildungssystems 4 mit zwei Testmustern 20a, 20b zu beleuchten. Hierzu ist eine erste Strichplatte 10a und eine zweite Strichplatte 10b vorhanden, welche ein erstes Testmuster 20a bzw. ein zweites Testmuster 20b umfassen. Das erste Testmuster 20a erstreckt sich in einer ersten Ebene und das zweite Testmuster 20b erstreckt sich in einer zweiten Ebene, wobei die erste Ebene und die zweite Ebene konjugierte Ebenen des Kollimators 6 sind.

Die erste Ebene und die zweite Ebene sind in unterschiedliche Richtungen gegenüber der optischen Achse A des Kollimators 6 geneigt. Während eine erste Kippachse 22a ähnlich der in Fig. 1 dargestellten Vorrichtung 2 senkrecht zur Papierebene verläuft, liegt die zweite Kippachse 22b (gepunktet dargestellt), um die die zweite Strichplatte 10b gegenüber der optischen Achse A des Kollimators 6 geneigt ist, in der Papierebene. Der Kollimator 6 umfasst einen als Strahlkombinierer wirkenden Strahlteiler 24, an dem die Strahlengänge für die erste Strichplatte 10a und für die zweite Strichplatte 10b zusammengeführt werden. Die optische Achse A knickt an dem Strahlteiler 24 in Richtung der zweiten Strichplatte 10b ab. Die zweite Strichplatte 10b ist um die in der dargestellten Papierebene liegende Kippachse 22b gegenüber diesem Teil der optischen Achse A des Kollimators 6 geneigt.

Die erste Kippachse 22a und die zweite Kippachse 22b schließen zumindest näherungsweise einen identischen Winkel von 90° ein. Ferner ist die erste Ebene der ersten Strichplatte 10a und die zweite Ebene der zweiten Ebene 10b derart geneigt, dass eine Längsrichtung L des ersten Testmusters 20a und eine weitere Längsrichtung La des zweiten Testmusters 20b mit der optischen Achse A des Kollimators 6 einen zumindest näherungsweise identischen Winkel ungleich 90° einschließen. Es ist gemäß weiteren Ausführungsbeispielen vorgesehen, dass die erste und die zweite Ebene um unterschiedliche Winkel ungleich 90° gegenüber der optischen Achse A geneigt sind.

Im Ergebnis werden auf dem Bildsensor 14 der Vorrichtung 2, der mit der Verarbeitungseinheit 16 ausgelesen wird, zwei in unterschiedliche Richtungen orientierte Testmuster, nämlich das erste Testmuster 20a und das zweite Testmuster 20b, abgebildet. Die beiden Testmuster 20a, 20b weisen Schärfeverläufe auf, welche in unterschiedliche Richtungen, bevorzugt in um 90° gegeneinander verdrehte Richtungen, orientiert sind.

Beispielhaft zeigen Fig. 4a) und 4b) die erste Strichplatte 10a und die zweite Strichplatte 10b), welche vorzugsweise in der in Fig. 3 dargestellten Vorrichtung 2 zum Einsatz kommen und um die erste Kippachse 22a bzw. die zweite Kippachse 22b gegenüber der optischen Achse A des Kollimators 6 verkippt angeordnet sind.

Beispielhaft ist als Testmuster 20 eine Schar zumindest näherungsweise paralleler Linien 26 vorgesehen, von denen aus Gründen der Übersichtlichkeit lediglich eine mit Bezugszeichen versehen ist. Die Linien 26 des Testmusters 20 sind in einer Längsrichtung L nebeneinander angeordnet und erstrecken sich jeweils in eine Linienrichtung LX, die zumindest näherungsweise senkrecht zu der Längsrichtung L orientiert ist. Eine solche Linienstruktur ist insbesondere als Testmuster 20 in einer Vorrichtung 2, wie sie Fig. 1 zeigt, einsetzbar.

Unter einer Linie wird im Kontext der vorliegenden Beschreibung auch eine Gerade oder eine Kante verstanden. Gemäß dem dargestellten Ausführungsbeispiel handelt es sich bei der ersten und zweiten Strichplatte 10a, 10b um die erste und die zweite Strichplatte 10a, 10b der in Fig. 3 gezeigten Vorrichtung 2. Ein erstes Testmuster 20a der Strichplatte 10a erstreckt sich in eine Längsrichtung L. Ein zweites Testmuster 20b der zweiten Strichplatte 10b erstreckt sich in eine weitere Längsrichtung La, welche bezüglich der optischen Achse A in eine zu der Kipprichtung der Längsrichtung L um 90° gedrehten Richtung verkippt ist.

Die Linienrichtung 26 ist zumindest näherungsweise parallel zur jeweiligen Kippachse 22a, 22b des ersten bzw. des zweiten Testmusters 20a, 20b orientiert. Die Testmuster 20a, 20b erstrecken sich jeweils in einer Ebene, die gegenüber der optischen Achse A des Kollimators 6 derart geneigt ist, dass die Längsrichtung L bzw. die weitere Längsrichtung La der Schar zumindest näherungsweise paralleler Linien 26 mit der optischen Achse A des Kollimators 6 einen Winkel ungleich 90° einschließt. Wie bereits erwähnt können die Neigungswinkel identisch oder unterschiedlich sein.

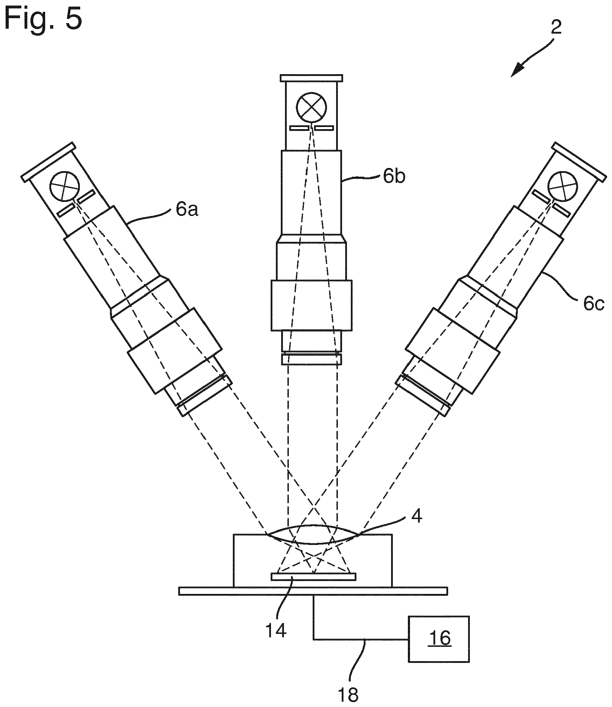

Fig. 5 zeigt eine weitere Vorrichtung 2 zum Messen der optischen Abbildungseigenschaften eines optischen Abbildungssystems 4, welcher eine Mehrzahl von Kollimatoren 6a, 6b, 6c umfasst. Jeder einzelne der Kollimatoren 6a, 6b, 6c ist beispielsweise so wie im Zusammenhang mit Fig. 1 oder im Zusammenhang mit Fig. 3 beschrieben, ausgestaltet. Auf die weiteren Details der Kollimatoren 6a, 6b, 6c soll daher nicht eingegangen werden. Wichtig ist bei der in Fig. 5 gezeigten Vorrichtung 2, dass die Kollimatoren 6a, 6b 6c das optische Abbildungssystem 4 aus verschiedenen Richtungen beleuchtet. So ist es möglich, das gesamte Bildfeld des optischen Abbildungssystems 4 zu analysieren. Mit Hilfe der in unterschiedlichen Bereichen des Bildfeldes durchgeführten Multifrequenz-MTF-Analysen ist es beispielsweise möglich, eine Bildfeldwölbung festzustellen. Die dargestellte Vorrichtung 2 umfasst neben dem Bildsensor 14 auch die Verarbeitungseinheit 16, welche über eine Datenverbindung 18 mit dem Bildsensor 14 gekoppelt ist und wie im Zusammenhang mit den vorstehenden Ausführungsbeispielen erwähnt konfiguriert ist.

Für alle zuvor beschriebenen Vorrichtungen 2 gilt, dass der Winkel α zwischen der Längsrichtung L des Testmusters 20 und der optischen Achse A des Kollimators 6 insbesondere größer als 0° und kleiner als 90° ist. Bevorzugt beträgt dieser größer gleich 3° und kleiner gleich 60° und ferner insbesondere größer gleich 5° und kleiner gleich 40°. Ferner werden eine Längsrichtung L, L1, L2 des Testmusters 20, 20a, 20b zumindest näherungsweise in einer Pixelrichtung des Bildsensors 14 orientiert. Die Längsrichtung L, L1, L2 des abgebildeten Testmusters 20, 20a, 20b erstreckt sich also beispielsweise in Zeilen- oder in Spaltenrichtung des Bildsensors 14. Dieser wird zum Ausrichten in einer Ebene senkrecht zu der optischen Achse A des Kollimators 6 entsprechend rotiert.

Ein Verfahren zum Messen von Abbildungseigenschaften eines optischen Abbildungssystems 4, wie es mit einer der Vorrichtungen 2, wie sie in den Fig. 1 bis 5 beschrieben sind, durchführbar ist, umfasst beispielhaft zumindest die folgenden Schritte:
Das optische Abbildungssystem 4 wird mit einem Kollimator 6, der das Testmuster 20 zumindest näherungsweise in eine definierte Entfernung abbildet, beleuchtet. Dieses Testmuster 20 weist zumindest eine Längsrichtung L auf, wobei diese Längsrichtung L mit der optischen Achse A des Kollimators 6 einen Winkel α ungleich 90° einschließt. Anschließend wird der Bildsensor 14 zumindest näherungsweise in einer Schärfeebene des optischen Abbildungssystems 4, welches zu prüfen ist, angeordnet. Anschließend wird eine Mehrfrequenz-MTF-Analyse in mehreren voneinander verschiedenen, insbesondere in der Längsrichtung L gegeneinander verschobenen Bereichen B1, B2 in einer mit dem Bildsensor 14 erfassten Abbildung des Testmusters 20 durchgeführt. Anhand der Daten der MTF-Analyse wird auf eine Abbildungsqualität und/oder auf eine Schärfeebene des optischen Abbildungssystems 4 geschlossen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Vorrichtung
- 4: Abbildungssystem
- 6a, 6b, 6c, 6: Kollimator
- 8a: erste Lichtquelle
- 8b: zweite Lichtquelle
- 8: Lichtquelle
- 10a: erste Strichplatte
- 10b: zweite Strichplatte
- 10: Strichplatte
- 12: Kollimatorlinse
- 14: Bildsensor
- 16: Verarbeitungseinheit
- 18: Datenverbindung
- 20a: erstes Testmuster
- 20b: zweites Testmuster
- 20: Testmuster
- 22a: erste Kippachse
- 22b: zweite Kippachse
- 22: Kippachse
- 24: Strahlteiler
- 26: Linien
- L: Längsrichtung
- La: weitere Längsrichtung
- L1: erste Längsrichtung
- L2: zweite Längsrichtung
- LX: Linienrichtung
- A: optische Achse
- B1: erster Bereich
- B2: zweiter Bereich
- α: Winkel

## Patentansprüche

1. Vorrichtung (2) zum Messen von Abbildungseigenschaften eines optischen Abbildungssystems (4), wobei ein Kollimator (6) mit einer Strichplatte (10), ein Bildsensor (14) und eine Verarbeitungseinheit (16) umfasst sind, wobei
- der Kollimator (6) und das optische Abbildungssystem (4) derart zueinander angeordnet sind, dass das optische Abbildungssystem (4) von dem Kollimator (6), der ein Testmuster (20) der Strichplatte (10) in eine definierte Entfernung abbildet, beleuchtbar ist,
wobei der Bildsensor (14) in einer Schärfeebene des optischen Abbildungssystems (4) angeordnet ist und **dadurch gekennzeichnet, dass**
- das Testmuster (20) zumindest eine Längsrichtung (L, L1, L2) aufweist und diese Längsrichtung (L, L1, L2) mit einer optischen Achse (A) des Kollimators (6) einen Winkel (α) ungleich 90° einschließt, wobei das Testmuster aufgrund seiner geneigten Anordnung teilweise vor und teilweise hinter einer Objektebene, welche von dem optischen Abbildungssystem scharf in die Bildebene abgebildet wird, liegt und
- die Verarbeitungseinheit (18) dazu eingerichtet ist, eine Mehrfrequenz-MTF-Analyse in mehreren voneinander verschiedenen, in Längsrichtung (L, L1, L2) gegeneinander verschobenen, Bereichen (B1, B2) einer mit dem Bildsensor (14) erfassten Abbildung des Testmusters (20) durchzuführen.

2. Vorrichtung (2) nach Anspruch 1, **dadurch gekennzeichnet, dass** die Verarbeitungseinheit (16) ferner dazu eingerichtet ist, aus den Daten der MTF-Analyse eine Schärfeebene und/oder eine Abbildungsqualität des optischen Abbildungssystems (4) zu bestimmen.

3. Vorrichtung (2) nach Anspruch 1 oder 2, **dadurch gekennzeichnet, dass** das Testmuster (20) zumindest eine linienförmige Struktur umfasst, die sich eine der Längsrichtungen (L1, L2) erstreckt.

4. Vorrichtung (2) nach einem der Ansprüche 1 bis 3, **dadurch gekennzeichnet, dass** das Testmuster (20) eine Schar zumindest näherungsweise paralleler Linien (26) umfasst, wobei diese Linien (26) in der Längsrichtung (L) nebeneinander angeordnet sind und sich jeweils in einer Linienrichtung (LX) erstrecken, die zumindest näherungsweise senkrecht zu der Längsrichtung (L) orientiert ist.

5. Vorrichtung (2) nach Anspruch 4, **dadurch gekennzeichnet, dass** die Linienrichtung (26) zumindest näherungsweise parallel zu einer Kippachse (22a, 22b) des Testmusters (20a, 20b) orientiert ist, wobei sich das Testmuster (20a, 20b) in einer Ebene erstreckt, die gegenüber der optischen Achse (A) des Kollimators (6) derart geneigt ist, dass die Längsrichtung (L, La) der Schar zumindest näherungsweise paralleler Linien (26) mit der optischen Achse (A) des Kollimators (6) einen Winkel (α) ungleich 90° einschließt.

6. Vorrichtung (2) nach einem der Ansprüche 1 bis 5, **dadurch gekennzeichnet, dass** sich das Testmuster (20) in eine erste Längsrichtung (L1) und in eine zweite Längsrichtung (L2) erstreckt, wobei die erste und die zweite Längsrichtung (L1, L2) jeweils einen zumindest näherungsweise identischen Winkel (α) ungleich 90° mit der optischen Achse (A) des Kollimators (6) einschließen und wobei insbesondere vorgesehen ist, dass die erste Längsrichtung (L1) und die zweite Längsrichtung (L2) in einer gemeinsamen Ebene einen Winkel (α) von zumindest näherungsweise 90° einschließen.

7. Vorrichtung (2) nach einem der Ansprüche 1 bis 6, **dadurch gekennzeichnet, dass** der Kollimator (6) dazu eingerichtet ist, das optische Abbildungssystem (4) mit zumindest zwei Testmustern (20a, 20b) zu beleuchten, wobei sich ein erstes Testmuster (20a) in einer ersten Ebene erstreckt und ein zweites Testmuster (20b) in einer zweiten Ebene erstreckt, wobei die erste Ebene und die zweite Ebene konjugierte Ebenen des Kollimators (6) sind, und wobei die erste Ebene und die zweite Ebene in unterschiedliche Richtungen gegenüber der optischen Achse (A) des Kollimators (6) geneigt sind, wobei insbesondere eine erste Kippachse (22a), um die die erste Ebene gegenüber der optischen Achse (A) des Kollimators (6) geneigt ist, und eine zweite Kippachse (22b), um die die zweite Ebene gegenüber der optischen Achse (A) des Kollimators (6) geneigt ist, einen Winkel (α) von zumindest näherungsweise 90° einschließen, wobei ferner insbesondere die erste Ebene und die zweite Ebene derart geneigt sind, dass eine Längsrichtung (L) des ersten Testmusters (20a) und eine weitere Längsrichtung (La) des zweiten Testmusters (20b) mit der optischen Achse (A) des Kollimators (6) einen zumindest näherungsweise identischen Winkel (α) ungleich 90° einschließen.

8. Vorrichtung (2) nach einem der Ansprüche 1 bis 7, **dadurch gekennzeichnet, dass** eine Mehrzahl von Kollimatoren (6a, 6b, 6c) umfasst ist, wobei die Kollimatoren (6a, 6b, 6c) derart angeordnet sind, dass sie das optische Abbildungssystem (4) aus verschiedenen Richtungen beleuchten.

9. Vorrichtung (2) nach einem der Ansprüche 1 bis 8, **dadurch gekennzeichnet, dass** der Winkel (α) zwischen der Längsrichtung (L) des Testmusters (20) und der optischen Achse (A) des Kollimators (6) größer als 0° und kleiner als 90°, insbesondere größer gleich 3° und kleiner gleich 60° und ferner insbesondere größer gleich 5° und kleiner gleich 40° ist.

10. Verfahren zum Messen von Abbildungseigenschaften eines optischen Abbildungssystems (4), mit den folgenden Schritten:
- Beleuchten des optischen Abbildungssystems (4) mit einem Kollimator (6), der ein Testmuster (20) in eine definierte Entfernung abbildet, Anordnen eines Bildsensors (14) in einer Schärfeebene des optischen Abbildungssystems (4),
**dadurch gekennzeichnet dass**, das Testmuster (20) zumindest eine Längsrichtung (L) aufweist,
und wobei die Längsrichtung (L) mit einer optischen Achse (A) des Kollimators (6) einen Winkel (α) von ungleich 90° einschließt, wobei das Testmuster aufgrund seiner geneigten Anordnung teilweise vor und teilweise hinter einer Objektebene, welche von dem optischen Abbildungssystem scharf in die Bildebene abgebildet wird, liegt,
- Durchführen einer Mehrfrequenz-MTF-Analyse in mehreren voneinander verschiedenen, in Längsrichtung (L) gegeneinander verschobenen, Bereichen (B1, B2) einer mit dem Bildsensor (14) erfassten Abbildung des Testmusters (20).

11. Verfahren nach Anspruch 10, **dadurch gekennzeichnet, dass** aus den Daten der MTF-Analyse eine Abbildungsqualität und/oder eine Schärfeebene des optischen Abbildungssystems (4) bestimmt werden.

12. Verfahren nach Anspruch 10 oder 11, **dadurch gekennzeichnet, dass** als Testmuster (20) eine Schar zumindest näherungsweise paralleler Linien (26) abgebildet wird, wobei diese Linien (26) in der Längsrichtung (L) nebeneinander angeordnet sind und sich jeweils in einer Linienrichtung (LX) erstrecken, die zumindest näherungsweise senkrecht zu der Längsrichtung (L) orientiert ist.

13. Verfahren nach Anspruch 12, **dadurch gekennzeichnet, dass** die Schar zumindest näherungsweise paralleler Linien (26) derart abgebildet wird, dass die Linienrichtung (LX) zumindest näherungsweise parallel zu einer Kippachse (22) des Testmusters (20) orientiert ist, wobei sich das Testmuster (20) in einer Ebene erstreckt, die gegenüber der optischen Achse (A) des Kollimators (6) derart geneigt ist, dass die Längsrichtung (L) der Schar zumindest näherungsweise paralleler Linien (26) mit der optischen Achse (A) des Kollimators (6) einen Winkel (α) ungleich 90° einschließt.

14. Verfahren nach einem der Ansprüche 10 bis 13, **dadurch gekennzeichnet, dass** der Kollimator (6) ein mit einer ersten Längsrichtung (L1) und einer zweiten Längsrichtung (L2) abbildet, wobei die erste Längsrichtung (L1) und die zweite Längsrichtung (L2) jeweils einen zumindest näherungsweise identischen Winkel (α) ungleich 90° mit der optischen Achse (A) des Kollimators (6) einschließen und wobei insbesondere vorgesehen ist, dass die erste Längsrichtung (L1) und die zweite Längsrichtung (L2) in einer gemeinsamen Ebene einen Winkel (α) von zumindest näherungsweise 90° einschließen.

15. Verfahren nach einem der Ansprüche 10 bis 14, **dadurch gekennzeichnet, dass** das optische Abbildungssystem (4) mit zumindest zwei Testmustern (20a, 20b) beleuchtet wird, wobei sich ein erstes Testmuster (20a) in einer ersten Ebene erstreckt und ein zweites Testmuster (20b) in einer zweiten Ebene erstreckt, wobei die erste Ebene und die zweite Ebene konjugierte Ebenen des Kollimators (6) sind und wobei die erste Ebene und die zweite Ebene in unterschiedliche Richtungen gegenüber der optischen Achse (A) des Kollimators (6) geneigt sind, wobei insbesondere eine erste Kippachse (22a), um die die erste Ebene gegenüber der optischen Achse (A) des Kollimators (6) geneigt ist, und eine zweite Kippachse (22b), um die die zweite Ebene gegenüber der optischen Achse (A) des Kollimators (6) geneigt ist, einen Winkel (α) von zumindest näherungsweise 90° einschließen, wobei ferner insbesondere die erste Ebene und die zweite Ebene derart geneigt sind, dass eine erste Längsrichtung (L1) des ersten Testmusters (20a) und eine zweite Längsrichtung (L2) des zweiten Testmusters (20b) mit der optischen Achse (A) des Kollimators (6) einen zumindest näherungsweise identischen Winkel (α) ungleich 90° einschließen.

## Claims

1. A device (2) for measuring the imaging properties of an optical imaging system (4), comprising a collimator (6) with a graticule (10), an image sensor (14) and a processing unit (16), wherein
- the collimator (6) and the optical imaging system (4) are arranged relative to each other such that the optical imaging system (4) can be illuminated by the collimator (6) which images a test pattern (20) of the graticule (10) at a defined distance, wherein the image sensor (14) is arranged in a sharpness plane of the optical imaging system (4), and **characterized in that**
- the test pattern (20) has at least one longitudinal direction (L, L1, L2), wherein this longitudinal direction (L, L1, L2) encloses an angle (α), which does not equal 90°, with an optical axis (A) of the collimator (6), wherein due to its angled arrangement, the test pattern lies partially in front of and partially behind an object plane which is sharply imaged in the image plane by the optical imaging system.
- the processing unit (18) is set up to perform a multi-frequency MFT analysis in a plurality of areas (B1, B2) of an image of the test pattern (20) detected by the image sensor (14) which are different from each other and shifted relative to each other in the longitudinal direction (L, L1, L2).

2. The device (2) according to claim 1, **characterized in that** the processing unit (16) is furthermore set up to determine a sharpness plane and/or an imaging quality of the optical imaging system (4) from the data of the MFT analysis.

3. The device (2) according to claim 1 or 2, **characterized in that** the test pattern (20) comprises at least one linear structure which extends in one of the longitudinal directions (L1, L2).

4. The device (2) according to one of claims 1 to 3, **characterized in that** the test pattern (20) comprises a set of at least approximately parallel lines (26), wherein these lines (26) are arranged next to each other in the longitudinal direction (L) and each line extends in a line direction (LX) that is oriented at least approximately perpendicular to the longitudinal direction (L).

5. The device (2) according to claim 4, **characterized in that** the line direction (26) is orientated at least approximately parallel to a tilt axis (22a, 22b) of the test pattern (20a, 20b), wherein the test pattern (20a, 20b) extends in a plane which is inclined relative to the optical axis (A) of the collimator (6) such that the longitudinal direction (L, La) of the set of at least approximately parallel lines (26) encloses an angle (α) with the optical axis (A) of the collimator (6) which does not equal 90°.

6. The device (2) according to any of claims 1 to 5, **characterized in that** the test pattern (20) extends in a first longitudinal direction (L1) and in a second longitudinal direction (L2), wherein the first and second longitudinal direction (L1, L2) each enclose an at least approximately identical angle (α) with the optical axis (A) of the collimator (6) which does not equal 90°, and wherein in particular the first longitudinal direction (L1) and the second longitudinal direction (L2) are provided to enclose an angle (α) of at least approximately 90° in a common plane.

7. The device (2) according to any of claims 1 to 6, **characterized in that** the collimator (6) is set up to illuminate the optical imaging system (4) with at least two test patterns (20a, 20b), wherein a first test pattern (20a) extends in a first plane, and a second test pattern (20b) extends in a second plane, wherein the first plane and the second plane are conjugated planes of the collimator (6), and wherein the first plane and the second plane are angled in different directions relative to the optical axis (A) of the collimator (6), wherein in particular a first tilt axis (22a), about which the first plane is angled relative to the optical axis (A) of the collimator (6), and a second tilt axis (22a), about which the second plane is angled relative to the optical axis (A) of the collimator (6), enclose an angle (α) of at least approximately 90°, wherein furthermore in particular the first plane and the second plane are angled such that a longitudinal direction (L) of the first test pattern (20a) and another longitudinal direction (La) of the second test pattern (20b) enclose an at least approximately identical angle (α) which does not equal 90° with the optical axis (A) of the collimator (6).

8. The device (2) according to any of claims 1 to 7, **characterized in that** a plurality of collimators (6a, 6b, 6c) is comprised, wherein the collimators (6a, 6b, 6c) are arranged such that they illuminate the optical imaging system (4) from different directions.

9. The device (2) according to any of claims 1 to 8, **characterized in that** the angle (α) between the longitudinal direction (L) of the test pattern (20) and the optical axis (A) of the collimator (6) is greater than 0° and less than 90°, and in particular greater than or equal to 3° and less than or equal to 60°, and furthermore in particular greater than or equal to 5° and less than or equal to 40°.

10. A method for measuring imaging properties of an optical imaging system (4), comprising the following steps:
- illumination of the optical imaging system (4) with a collimator (6) which images a test pattern (20) at a defined distance,
- arrangement of an image sensor (14) in a sharpness plane of the optical imaging system (4), **characterized in that** the test pattern (20) has at least one longitudinal direction (L), and wherein the longitudinal direction (L) encloses an angle (α), which does not equal 90°, with an optical axis (A) of the collimator (6), wherein due to its angled arrangement, the test pattern lies partially in front of and partially behind an object plane which is sharply imaged in the image plane by the optical imaging system,
- performance of a multi-frequency MTF analysis in a plurality of areas (B1, B2) of an image of the test pattern (20) detected by the image sensor (14) which are different from each other and shifted relative to each other in the longitudinal direction (L).

11. A method according to claim 10, **characterized in that** an imaging quality and/or a sharpness plane of the optical imaging system (4) are determined from the data of the MTF analysis.

12. The method according to any of claims 10 or 11, **characterized in that** the test pattern (20) comprises a set of at least approximately parallel lines (26), wherein these lines (26) are arranged next to each other in the longitudinal direction (L) and each line extends in a line direction (LX) that is oriented at least approximately perpendicular to the longitudinal direction (L).

13. The method according to claim 12, **characterized in that** the set of at least approximately parallel lines (26) is imaged in such a manner that the line direction (LX) is orientated at least approximately parallel to a tilt axis (22) of the test pattern (20), wherein the test pattern (20) extends in a plane which is angled relative to the optical axis (A) of the collimator (6) such that the longitudinal direction (L) of the set of at least approximately parallel lines (26) encloses an angle (α) with the optical axis (A) of the collimator (6) which does not equal 90°.

14. The method according to any of claims 10 to 13, **characterized in that** the collimator (6) images with a first longitudinal direction (L1) and a second longitudinal direction (L2), wherein the first longitudinal direction (L1) and the second longitudinal direction (L2) each enclose an at least approximately identical angle (α) with the optical axis (A) of the collimator (6) which does not equal 90°, and wherein in particular the first longitudinal direction (L1) and the second longitudinal direction (L2) enclose an angle (α) of at least approximately 90° in a common plane.

15. The method according to any of claims 10 to 14, **characterized in that** the optical imaging system (4) is illuminated with at least two test patterns (20a, 20b), wherein a first test pattern (20a) extends in a first plane, and a second test pattern (20b) extends in a second plane, wherein the first plane and the second plane are conjugated planes of the collimator (6), and wherein the first plane and the second plane are angled in different directions relative to the optical axis (A) of the collimator (6), wherein in particular a first tilt axis (22a), about which the first plane is angled relative to the optical axis (A) of the collimator (6), and a second tilt axis (22a), about which the second plane is angled relative to the optical axis (A) of the collimator (6), enclose an angle (α) of at least approximately 90°, wherein furthermore in particular the first plane and the second plane are angled such that a first longitudinal direction (L1) of the first test pattern (20a) and a second longitudinal direction (L2) of the second test pattern (20b) enclose an at least approximately identical angle (α) which does not equal 90° with the optical axis (A) of the collimator (6).

## Revendications

1. Dispositif (2) destiné à mesurer des caractéristiques d'imagerie d'un système d'imagerie optique (4), comprenant un collimateur (6) avec un réticule (10), un capteur d'image (14) et une unité de traitement (16), dans lequel
- le collimateur (6) et le système d'imagerie optique (4) sont agencés l'un par rapport à l'autre de telle sorte que le système d'imagerie optique (4) peut être éclairé par le collimateur (6) qui reproduit en image un motif de test (20) du réticule (10) à une distance définie,
dans lequel le capteur d'image (14) est agencé dans un plan de netteté du système d'imagerie optique (4) et **caractérisé en ce que**
- le motif de test (20) comporte au moins une direction longitudinale (L, L1, L2) et cette direction longitudinale (L, L1, L2) forme un angle (α) différent de 90° avec un axe optique (A) du collimateur (6), dans lequel le motif de test, du fait de son agencement incliné, se situe en partie devant et en partie derrière un plan objet qui est reproduit en image de manière nette dans le plan image par le système d'imagerie optique et
- l'unité de traitement (18) est conçue pour effectuer une analyse MTF à fréquences multiples dans plusieurs zones (B1, B2) d'une image du motif de test (20) capturée avec le capteur d'image (14), lesquelles zones, différentes l'une de l'autre, étant décalées l'une par rapport à l'autre dans la direction longitudinale (L, L1, L2).

2. Dispositif (2) selon la revendication 1, **caractérisé en ce que** l'unité de traitement (16) est en outre conçue pour déterminer, à partir des données de l'analyse MTF, un plan de netteté et/ou une qualité d'imagerie du système d'imagerie optique (4).

3. Dispositif (2) selon la revendication 1 ou 2, **caractérisé en ce que** le motif de test (20) comprend au moins une structure linéaire qui s'étend dans l'une des directions longitudinales (L1, L2).

4. Dispositif (2) selon l'une des revendications 1 à 3, **caractérisé en ce que** le motif de test (20) comprend un ensemble de lignes (26) au moins sensiblement parallèles, dans lequel ces lignes (26) sont agencées les unes à côté des autres dans la direction longitudinale (L) et s'étendent respectivement dans une direction de ligne (LX) qui est orientée de manière au moins sensiblement perpendiculaire à la direction longitudinale (L).

5. Dispositif (2) selon la revendication 4, **caractérisé en ce que** la direction de ligne (26) est orientée de manière au moins sensiblement parallèle à un axe de basculement (22a, 22b) du motif de test (20a, 20b), dans lequel le motif de test (20a, 20b) s'étend dans un plan qui est incliné par rapport à l'axe optique (A) du collimateur (6), de sorte que la direction longitudinale (L, La) de l'ensemble de lignes (26) au moins sensiblement parallèles forme un angle (α) différent de 90° avec l'axe optique (A) du collimateur (6).

6. Dispositif (2) selon l'une des revendications 1 à 5, **caractérisé en ce que** le motif de test (20) s'étend dans une première direction longitudinale (L1) et dans une seconde direction longitudinale (L2), dans lequel la première et la seconde direction longitudinale (L1, L2) forment respectivement un angle (α) avec l'axe optique (A) du collimateur (6) différent de 90° au moins sensiblement identique, et dans lequel il est en particulier prévu que la première direction longitudinale (L1) et la seconde direction longitudinale (L2) dans un plan commun forment un angle (α) au moins sensiblement égal à 90°.

7. Dispositif (2) selon l'une des revendications 1 à 6, **caractérisé en ce que** le collimateur (6) est conçu pour éclairer le système d'imagerie optique (4) avec au moins deux motifs de test (20a, 20b), dans lequel un premier motif de test (20a) s'étend dans un premier plan et un second motif de test (20b) s'étend dans un second plan, dans lequel le premier plan et le second plan sont des plans conjugués du collimateur (6), et dans lequel le premier plan et le second plan sont inclinés dans différentes directions par rapport à l'axe optique (A) du collimateur (6), dans lequel en particulier un premier axe de basculement (22a) autour duquel le premier plan est incliné par rapport à l'axe optique (A) du collimateur (6), et un second axe de basculement (22b) autour duquel le second plan est incliné par rapport à l'axe optique (A) du collimateur (6), forment un angle (α) au moins sensiblement égal à 90°, dans lequel en particulier le premier plan et le second plan sont en outre inclinés de sorte qu'une direction longitudinale (L) du premier motif de test (20a) et une direction longitudinale supplémentaire (La) du second motif de test (20b) forment un angle (α) avec l'axe optique (A) du collimateur (6) différent de 90°au moins sensiblement identique.

8. Dispositif (2) selon l'une des revendications 1 à 7, **caractérisé en ce qu'**il comprend une pluralité de collimateurs (6a, 6b, 6c), dans lequel les collimateurs (6a, 6b, 6c) sont agencés de telle sorte qu'ils éclairent le système d'imagerie optique (4) à partir de différentes directions.

9. Dispositif (2) selon l'une des revendications 1 à 8, **caractérisé en ce que** l'angle (α) entre la direction longitudinale (L) du motif de test (20) et l'axe optique (A) du collimateur (6) est supérieur à 0°et inférieur à 9 0° en particulier supérieur ou égal à 3° et inférieur ou égal à 60°, et en outre en par ticulier supérieur ou égal à 5° et inférieur ou égal à 40°.

10. Procédé pour mesurer des caractéristiques d'imagerie d'un système d'imagerie optique (4), comportant les étapes suivantes consistant à :
- éclairer le système d'imagerie optique (4) avec un collimateur (6) qui reproduit en image un motif de test (20) à une distance définie,
- agencer un capteur d'image (14) dans un plan de netteté du système d'imagerie optique (4),
**caractérisé en ce que** le motif de test (20) comporte au moins une direction longitudinale (L), et dans lequel la direction longitudinale (L) forme un angle (α) avec un axe optique (A) du collimateur (6) différent de 90°, dans lequel le motif de test, du fait de son agencement incliné, se situe en partie devant et en partie dernière un plan objet qui est reproduit en image dans le plan image de manière nette par le système d'imagerie optique,
- effectuer une analyse MTF à fréquences multiples dans plusieurs zones (B1, B2) d'une image du motif de test (20) capturée avec le capteur d'image (14), lesquelles zones, différentes l'une de l'autre, étant décalées l'une par rapport à l'autre dans la direction longitudinale (L).

11. Procédé selon la revendication 10, **caractérisé en ce que**, à partir des données de l'analyse MTF, une qualité d'imagerie et/ou un plan de netteté du système d'imagerie optique (4) sont déterminés.

12. Procédé selon la revendication 10 ou 11, **caractérisé en ce qu'**un ensemble de lignes (26) au moins sensiblement parallèles est reproduit sous forme de motif de test (20), dans lequel ces lignes (26) sont agencées les unes à côté des autres dans la direction longitudinale (L) et s'étendent respectivement dans une direction de ligne (LX) qui est orientée de manière au moins sensiblement perpendiculaire à la direction longitudinale (L).

13. Procédé selon la revendication 12, **caractérisé en ce que** l'ensemble de lignes (26) au moins sensiblement parallèles est reproduit de telle sorte la direction de ligne (LX) est orientée de manière au moins sensiblement parallèle à un axe de basculement (22) du motif de test (20), dans lequel le motif de test (20) s'étend dans un plan qui est incliné par rapport à l'axe optique (A) du collimateur (6) de sorte que la direction longitudinale (L) de l'ensemble de lignes (26) au moins sensiblement parallèles forme un angle (α) avec l'axe optique (A) du collimateur (6) différent de 90°.

14. Procédé selon l'une des revendications 10 à 13, **caractérisé en ce que** le collimateur (6) reproduit une image avec une première direction longitudinale (L1) et une seconde direction longitudinale (L2), dans lequel la première direction longitudinale (L1) et la seconde direction longitudinale (L2) forment respectivement un angle (α) avec l'axe optique (A) du collimateur (6) différent de 90° au moins sensiblement identique, et dans lequel il est en particulier prévu que la première direction longitudinale (L1) et la seconde direction longitudinale (L2) forment un angle (α) dans un plan commun au moins sensiblement égal à 90°.

15. Procédé selon l'une des revendications 10 à 14, **caractérisé en ce que** le système d'imagerie optique (4) est éclairé avec au moins deux motifs de test (20a, 20b), dans lequel un premier motif de test (20a) s'étend dans un premier plan et un second motif de test (20b) s'étend dans un second plan, dans lequel le premier plan et le second plan sont des plans conjugués du collimateur (6), et dans lequel le premier plan et le second plan sont inclinés dans différentes directions par rapport à l'axe optique (A) du collimateur (6), dans lequel en particulier un premier axe de basculement (22a) autour duquel le premier plan est incliné par rapport à l'axe optique (A) du collimateur (6), et un second plan de basculement (22b) autour duquel le second plan est incliné par rapport à l'axe optique (A) du collimateur (6), forment un angle (α) au moins sensiblement égal à 90°, dans lequel en particulier le premier plan et le second plan sont en outre inclinés de sorte qu'une première direction longitudinale (L1) du premier motif de test (20a) et une seconde direction longitudinale (L2) du second motif de test (20b) forment un angle (α) avec l'axe optique (A) du collimateur (6) différent de 90° au moins sensiblement identique.
